Europäisches Patentamt

European Patent Office

Office européen des brevets

(11) Publication number: **0 259 165**
**A2**

## EUROPEAN PATENT APPLICATION

(21) Application number: 87307788.7

(22) Date of filing: 03.09.87

(51) Int. Cl.⁴: **E 02 B 3/12**
// B29C47/00

(30) Priority: 05.09.86 US 905070

(43) Date of publication of application:
09.03.88 Bulletin 88/10

(84) Designated Contracting States:
AT BE CH DE ES FR GB GR IT LI LU NL SE

(71) Applicant: LEUCADIA,INC.
315 Park Avenue South
New York NY 10010 (US)

(72) Inventor: Slocumb, Robert C.
6109 Jeffrey Lane
Edina Minnesota (US)

Demeny, Darwin D.
1970 Lakeaires Boulevard
White Bear Lake Minnesota (US)

(74) Representative: Marlow, Nicholas Simon et al
Reddie & Grose 16, Theobalds Road
London WC1X 8PL (GB)

(54) Subsurface drainage matting.

(57) Subsurface drainage matting (15) for the collection and containment of waste fluids, the matting comprising multiple, i.e., two or more layers, (12, 14, 22) of largely thermoplastic sheet-like materials in which the layers include a non-skid feature.

Fig. 1

## Description

## SUBSURFACE DRAINAGE MATTING

The invention is concerned with subsurface drainage matting used primarily in landfills, waste ponds, evaporative ponds, hazardous waste sites and the like, hereinafter referred to collectively as landfills. Landfills may contain solid waste or liquid waste or both. In any event, whether fluid is formed from the waste itself or by the collection of drainage water or both, such waste sites must be provided with means for preventing waste liquids in the landfill from entering the natural ground surface waters of the locality. It has, therefore, become customary practice to line such landfill sites with synthetic drainage matting. Such drainage matting is often referred to as a liner system.

The matting used heretofore has ordinarily been comprised of three or more layers of largely thermoplastic materials. The matting is constructed or formed on site by lining the landfill with a first liner layer of plastic sheet material which is liquid impervious. This liner is sometimes termed a flexible membrane liner (FML). Typical materials for liners are PVC, chlorinated sulfonated polyethylenes such as Hypalon® available from DuPont, and especially high-density polyethylene (HDPE). NSC 60 mil Liner is a HDPE type which is readily available from National Seal Company of Galesburg, Illinois. A drainage layer such as plastic net is then laid over the liner layer and a filter layer such as a geotextile sheet-like material is overlaid on the netting or drainage layer. The matting may then be covered with a layer of clay, soil or the like after which the landfill is ready for receiving waste materials. This construction may be varied by adding more layers or rearranging same.

Typical geotextiles are: spun-bonded non-woven polyester fabrics such as Bidim® from Quline Corp., Raleigh, NC; Trevira available from Hoechst Fibers Industries, Spartanburg, SC and non-woven, needle punched polypropylene fabric such as Polyfelt from Chemie Linz U.S., Inc.

In operation, the top filter layer is liquid pervious. As liquid drains through the waste and encounters the filter layer, it is filtered therethrough and collected in the drainage layer, not being able to drain through the liner layer which is liquid impervious. The drainage layer directs the liquid to a collection point such as a sump or the like. In other configurations, the upper layer may be a film or liner which is liquid impervious.

Such arrangements have been found acceptable in the past. However, as the side slopes of the landfill have increased in steepness, a problem has been encountered. Past practices have found side slopes of about 13 to 17 degrees to be acceptable. Such gradual slopes waste a considerable volume of the landfill. It has thus become desirable to increase the pitch or steepness of the side slopes to angles as high as 26 and even to 38 degrees thereby increasing the volume of waste which the landfill can accept. In short, landfill slopes are getting steeper in order to maximize available space. Unfortunately, due to the nature of the matting construction and the matting materials, a problem has been encountered in that layers of the matting, which have low frictional properties relative to each other tend to slip on the steeper grades causing various of the layers to slide down the walls of the landfill endangering the integrity of the collection and drainage function of the matting.

It is a primary purpose of the present invention to solve this problem by providing a matting construction and materials for use in such matting which may be used on steeper slopes in excess of about 17 degrees and as high as about 38 degrees without danger of their slipping down the walls of the landfill. That is, the various components thereof remain in place when the drainage matting is constructed on site as has been the usual practice to date.

According to the present invention there is provided a multilayer subsurface drainage matting characterised in that the matting comprises means for providing increased friction between any two adjacent layers whereby slippage therebetween is substantially decreased. Such means may, in accordance with the invention, be provided between a pair of adjacent layers or between many adjacent layers in the matting, as desired. Moreover, the non-skid function may be provided by modifying the surface of an already present component layer in the matting or by the addition of another component layer to the matting.

The present invention will now be further described, by way of example, with respect to the accompanying drawings, in which:

Fig. 1 is a perspective view of a preferred embodiment of improved subsurface drainage matting according to the invention;

Fig. 2 is a sectional side elevation of the drainage matting of Fig. 1 used to line a landfill;

Fig. 3 is a sectioned perspective view of a landfill;

Fig. 4 is a fragmentary perspective detail of the subsurface drainage matting showing detail of another embodiment of the invention,

Figs. 5, 6, 9 and 10 are schematic showings of various alternate embodiments of the invention; and

Fig. 7 is a showing of an occluded net.

As already indicated hereinabove, the subsurface drainage matting used heretofore in the art, has consisted of a wide variety of multiple layer constructions subject to wide variation. Most of these constructions, even when consisting of several layers of materials, have included at least a lower liquid impervious liner layer, an intermediate drainage layer and an upper geotextile or filter layer which is liquid pervious. The variation in construction comes about in the use in various landfills of multiple sets of such three-layer constructions and also of inserting various other layers between these basic three layers. Therefore, this invention, even though describing specific embodiments, is subject to these same variations in construction whereby various matting arrangements not specifically described herein are clearly within the purview of this invention and are intended to be so included.

Additional variations are made possible by several alternate embodiments of the invention which provide alternate means for achieving non-skid or high friction relationships between the various thermoplastic layers of subsurface drainage matting constructions.

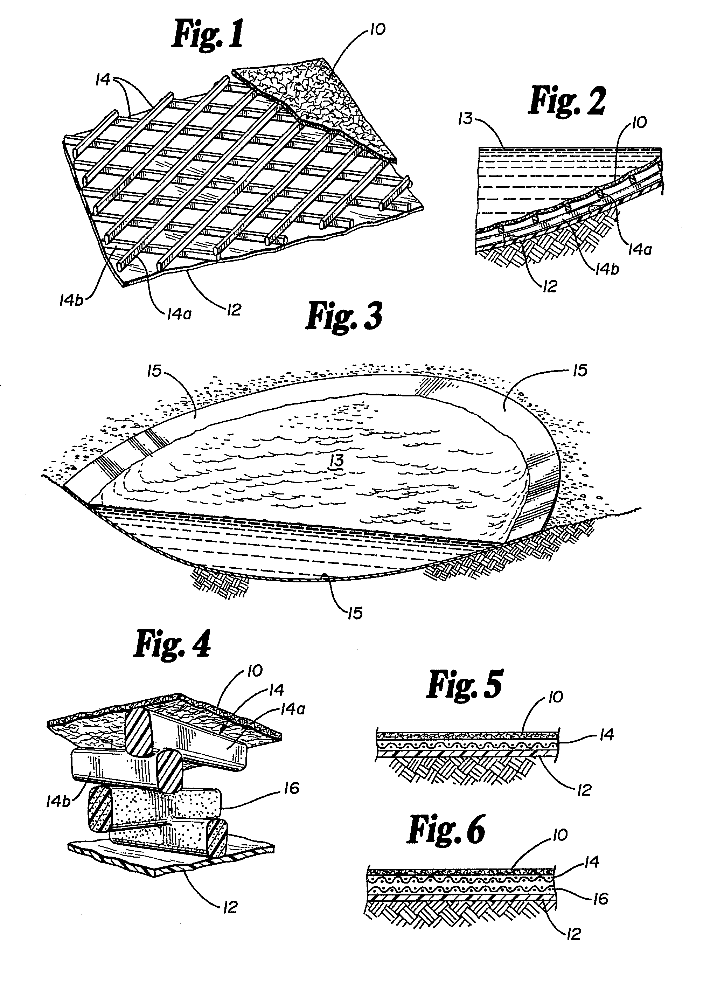

A first such embodiment which is a preferred embodiment of the invention contemplates the provision of non-skid surface directly to the drainage layer per se of a matting construction of the type which has been in typical use in the art. Such an embodiment is shown in Fig. 1 and includes an upper geotextile layer 10 which is liquid pervious as already described hereinabove. The most preferred geotextile is Fibretex® geotextile fabric, a continuous polypropylene filament fabric, formed of layered sheets and needle punched, which is available from Crown Zellerbach, Wasbougal, Washington 98671 which is liquid pervious. The construction also includes a lower liner layer 12 (FML) which is preferably high density polyethylene (HDPE) and is liquid impervious. Typically, this liner layer will be about 20-100 gauge in thickness or .020 inches to 0.1 inch or the like. Typical FML materials have been already described hereinabove.

In this embodiment the intermediate drainage layer takes the form of a non-skid extruded thermoplastic netting in which the two sets of cross strands are oriented one above the other in a diamond pattern. Preferably then, the netting is biplanar in that one set of strands 14a overlies the other set 14b as shown to provide continuous channels for liquid drainage as is indicated schematically in Fig. 2, the landfill or liquid being indicated at 13. This embodiment is also shown schematically in Fig. 5 along with several other arrangements shown in Figs. 6 and 8-10. The schematic of Fig. 5 includes upper filter layer 10, non-skid drainage net layer 14 and liner layer 12. Preferred netting materials for 14 are the polyethylene (PE) copolymers (octene, hexene, butene): Type I, low density PE (resin specific gravity 0.910 - 0.925 g/cc; Type II, medium density PE (resin specific gravity 0.926 - 0.940 g/cc (ASTM), and Type III, high density PE copolymer (specific gravity 0.941 - 0.959 g/cc (ASTM). A must preferred material is a polyethylene copolymer (octene-based) with a specific gravity of 0.935-0.940.

As already pointed out, the drainage layer is preferably of plastic net such as net 14 in Figs. 1 and 2. Such net is readily available. The continuous extrusion of plastic net in sheet-like form has been known since about 1956. Such a process is described in U.S. Patent 2,919,467. The initial extrusion process developed along two basic lines: the first, in which plastic sheet is extruded and holes are formed therein to form net-like structure, and the second, in which individual plastic strands are extruded in an interconnecting network to provide net-like structure. Methods for practicing the latter technique are described in U.S. Patents 3,700,521; 3,767,353; 3,723,218; 4,123,491; 4,152,479 and 4,190,692. All of these patents are incorporated by reference into the present specification as are all of the patents which are referred to hereinbelow in further description of this invention.

The listed patents describe processes in which at least one set of strands is extruded through a plurality of spaced individual orifices. A second set of strands in the net structure may be extruded through a second set of spaced individual orifices or a second set of strands may be preferentially extruded periodically through a continuous annular orifice slit. In all cases, the two sets of strands are extruded such that the individual strands intersect at an angle and form connecting joints in the extruded plastic net. Such a process produces a tubular structure of net which may then be slit to form a continuous sheet of netting. Following formation, the thermoplastic net may be stretch oriented or the like for increasing its strength or physical dimensions.

Reference may be made to U.S. Patent 2,919,467 for a description of diamond net formation of the biplanar type, i.e., the net referred to in Figs. 1 and 2.

Referring again to Figs. 1 and 2, the preferred embodiment shown comprises a construction in which the drainage net 14 has been modified to include a high friction surface relative to the geotextile layer 10 and the liner layer 12 to thereby provide a non-skid relationship between the various layers.

The non-skid or high friction surface of drainage net 14 shown in Figs. 1 and 2 is preferably obtained by a process in which a blooming additive is incorporated into the thermoplastic composition utilized to form the net during its manufacture prior to the extrusion process. The blooming additive is chosen to be sufficiently incompatible with the base polymer forming the net so as to "bloom" to the surface following extrusion thereby providing a coating on the strands of the net of a material which is relatively "tacky" by nature or is simply of a higher coefficient of friction. Loadings of about 1-10% by weight are adequate. Such materials, usable with the aforementioned net plastic materials are, for example, polybutylenes, ethylene vinyl acetate copolymers such as DuPont CXA-3101 and CXA-1123, thermoplastic rubber copolymers, styrene butadiene copolymers, ionomers, e.g., DuPont Surlyn® ionomer resins, oxidizing vegetable oils such as linseed or tung oil and amorphous polypropylene. Particularly preferred blooming additives are: Vistanex® polyisobutylene (LM-MH grade) from Exxon Chemical Company, and Santoprene® thermoplastic rubber consisting of isobutylene-butene copolymers which are predominantly (95-100%) high molecular weight mono-olefins and cured rubber particles in a thermoplastic matrix available from Monsanto Polymer Products Company.

## EXAMPLES

Blooming additives were compounded into linear medium density polyethylene (Dowlex 2038, available from Dow Chemical Co.):

(a) polyisobutylenes (polyisobutenes) such as Vistanex (Exxon) and H100 (Amoco) at additive levels of 8% to 15% showed about a 10% friction increase with time allowed for "blooming".

(b) an 80% Dowlex/20% Kraton thermoplastic rubber (D2103) blend was extruded into a net about 0.2 inches thick, 180 pounds per 1,000 square feet, strand count 2-3 per inch. This net showed a 30% increase in friction upon allowance of time for "blooming" to occur.

As an alternate embodiment of the invention, suitable frictional materials may be co-extruded with the basic net thermoplastic composition in laminar fashion to provide layered strands of composite material consisting of the strand thermoplastic material per se having upper or lower or both upper and lower surfaces of the strands coated with layers of co-extruded frictional materials such as thermoplastic polyurethanes such as Texin Thermoplastic Urethane, ethylene-methyl acrylate copolymer (EMA) or ethylene-vinyl acetate copolymer (EVA) on strands of polypropylene, high density polyethylene, low density polyethylene, linear-low-density polyethylene and copolymers thereof. Elvax® resins (copolymers of ethylene and vinyl acetate, ranging in vinyl acetate content from 9-40% and in melt index (MI) from 0.3 -150) are good frictional material for use in this embodiment. They are available from DuPont Company. Other strand or base polymers consisting of nylon and other polyamides, polyesters and copolymers may also be used as well as many polyolefins.

EXAMPLES

Frictional measurements were made in coextruded net. All tests performed under the following conditions:

A 9.98kg normal force load in the form of a dead weight was placed on the sample to be tested. The sample was then placed on a surface of smooth high density polyethylene sheet 0.100 inches thick.

A 2 inch/min. pull speed by Instron lab test device.

A 2.5" x 2.5" sample size was used.

The following results were obtained:

| Coextruded Coating | Sample | Coefficient of Friction* |
|---|---|---|
| Santoprene | 1 | 0.36 |
| | 2 | 0.34 to 0.40 |
| Texin Thermoplastic Urethane | 1 | 0.71 |
| | 2 | 0.79 |
| Elvax (EVA) | 1 | 0.64 |
| | 2 | 0.62 |
| Plain (uncoated) | 1 | 0.47 |

*measured as ratio of horizontal pulling force to normal force.

Co-extrusion and tri-extrusion of net-like products can be obtained by utilizing a process similar to that shown in U.S. Patent 4,410,587 which deals with the co-extrusion and tri-extrusion of film-like product. Tri-extrusion is specifically described in co-pending applications Serial No. 753,627 entitled Multiple Layer Reinforced Laminate filed July 10, 1985 and Serial No. 593,829 entitled Plastic Net Composed of Co-Extruded Composite Strands filed March 27, 1984, both of which are assigned to the same assignee as the present applicaton and which are incorporated herein by reference.

A typical landfill arrangement is indicated in Fig. 3 showing the drainage matting 15 covering the slopes of the landfill and extending below the landfill contents 13 to completely line the landfill at the bottom thereof.

As already pointed out, in the embodiments described above, the means for increasing the coefficient of friction between adjacent layers of the subsurface drainage matting is incorporated directly into or onto the drainage layer body itself. Specifically the drainage layer takes the form of frictional drainage net which is preferably of the biplanar diamond net configuration in the most preferred embodiments.

However, friction between adjacent layers can also be obtained by the provision of an additional layer to the matting composite rather than modifying a layer which is already present. The additional layer may take various forms such as film, net and so forth. Such a modification is shown in Figure 4 in which an additional layer 16 of extruded netting is produced to include a high friction surface relative to the other thermoplastic materials between which it is placed. For example, as shown in Figure 4, it may be placed between a drainage net 14 and liner 12 to provide the non-skid function as between layers 12 and 14. Likewise, additional layers such as 16 could be placed between other layers in a matting construction to provide the non-skid function.

The non-skid function of layer 16 can be provided as described above by co-extruding or by including blooming additives in any suitable thermoplastic composition. Additionally, the netting 16 or other non-skid body may be made of compositions which provide relatively high friction surfaces inherently relative to the coefficient of friction of the adjacent surface materials to be used. For example, the blooming additives referred to hereinabove may be extruded per se to provide high friction netting. Additionally, the netting of layers 16 may be formed of ethylene methacrylate copolymers, polybutylenes, atactic polyolefins, ethylene vinyl acetate copolymers, and ionomers. The construction of this embodiment is shown schematically in Figure 6. It includes upper filter layer 10, net drainage layer 14, non-skid net layer 16 and liner layer 12.

Also note in connection with Fig. 4 that although the drainage net 14 will preferably be biplanar configuration, the net utilized for 14 for 16 may be of uniplanar configuration, if the transverse strands are smaller in cross-section than the longitudinal strands to permit fluid flow in the longitudinal direction. In addition, 16 may be merely film, punched film or any other body configuration whether pervious or not in the particular arrangement shown.

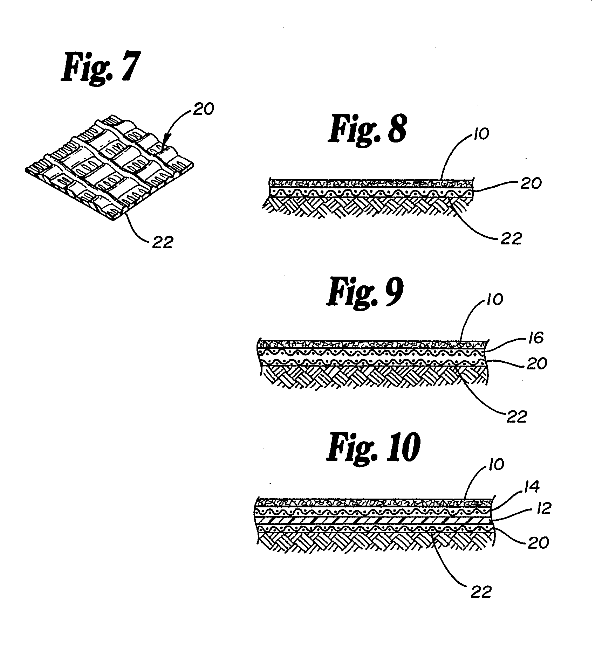

The last specific embodiment of the invention to be described makes use of what is termed occluded film, i.e., a layer which combines both the function of the drainage net and the liquid impervious liner layer together in a single integral body. Such an occluded net or occluded layer 20 is shown in Fig. 7 consisting of cross strands 14, the openings of which are filled in by integral film or layer 22.

An occluded net liner such as 20 may be utilized in various ways as shown schematically in Figs. 8, 9 and 10. In Fig. 8 specifically, the occluded layer 20 is formed similarly to the embodiment described in Fig. 1 wherein the occluded drainage net/solid liner 20 composite also includes especially adapted surfaces to provide the high friction function in the same manner as described in connection with Fig. 1. In use, only a second layer, i.e., layer 10 of geotextile is required to provide a relatively simple construction for subsurface drainage matting.

Referring now to Fig. 9, a construction more similar to that shown and discussed in Fig. 4 is disclosed wherein an occluded layer providing the drainage function and liner function is shown at 20. The geotextile layer 10 is separated by a high friction layer 16 which may be of an extruded net such as that described with reference to Fig. 4.

Referring to Fig. 10, a further variation in construction may be used in which geotextile layer 10 rests on drainage net layer 14 which in turn rests on a liner layer 12. Liner layer 12 is positioned over an occluded net film layer 20 with the film side 22 "down". It may also be positioned with the film side "up". Any or all of layers 14, 12 or 20 may be modified according to this invention to include the various non-skid features described.

## Claims

1. A multilayer subsurface drainage matting (15) substantially of thermoplastic material which forms individual layers of the matting, characterised in that the matting comprises means for providing increased friction between any two adjacent layers whereby slippage therebetween is substantially decreased.

2. A matting (15) according to claim 1, in which the top layer is liquid impervious.

3. A matting (15) according to claim 1 or 2, wherein one of the layers comprises thermoplastic netting including at least one non-skid surface.

4. A multilayer subsurface drainage matting (15) according to claim 1, including at least an upper liquid pervious filter layer (10), a lower liquid impervious layer (12) (22) and an intermediate drainage layer (14), the matting further comprising means for providing increased friction between at least two adjacent layers of the matting whereby slippage between layers is substantially eliminated.

5. A matting (15) according to any of claims 1 to 4, wherein the increased friction means comprises a non-skid surface area included on at least one of the lower two layers of the matting.

6. A matting (15) according to claim 5, wherein the non-skid surface comprises a co-extruded laminar layer of relatively high friction material on the drainage layer.

7. A matting (15) according to claim 5, wherein the drainage layer is of thermoplastic composition including within its composition a quantity of blooming additive as the non-skid surface.

8. A matting (15) according to any of claims 1 to 4, wherein the increased friction means comprises an additional layer placed between two of the adjacent layers of the matting, the additional layer providing a non-skid surface.

9. A matting (15) according to claim 8, wherein the additional layer body provides opposed non-skid surface areas.

10. A matting (15) according to any of claims 8 or 9, wherein the additional layer is thermoplastic co-extruded with a laminar layer of relatively high friction material thereon.

11. A matting (15) according to claim 10 wherein the additional layer is in the form of netting.

12. A matting (15) according to any of claims 8 to 11 wherein the additional layer is a thermoplastic

## 0 259 165

composition including a quantity of blooming additive.

13. A matting (15) according to claim 11 wherein the netting is polypropylene and the co-extruded laminar layer is ethylene-vinyl acetate.

14. A matting (15) according to any of claim 4 or to any of claims 5 to 13 when dependent on claim 4, wherein the drainage layer comprises thermoplastic netting.

15. A matting (15) according to claim 14, wherein the netting is of biplanar diamond configuration.

16. A multi-layer subsurface drainage matting (15) according to claim 1, including an upper liquid pervious layer (10), a lower liquid impervious layer (22) and an intermediate drainage layer (14), the drainage layer being in the form of extruded thermoplastic net and the lower layer being integrally co-extruded therewith, the net being occluded during extrusion to form the integral lower layer in the form of a liquid impervious film.

17. A matting (15) according to claim 16, wherein the integral layer includes a non-skid surface of relatively high friction contacting at least the adjacent layer of the matting.

18. A matting (15) according to claim 17, wherein the non-skid surface comprises a laminar layer of co-extruded material.

19. A matting (15) according to any of claims 16 to 18, wherein the netting configuration is biplanar.

20. A matting (15) according to any of claims 16 to 19, wherein the integral layer includes a quantity of a blooming additive.

21. An extruded thermoplastic netting comprising a quantity of a blooming additive.

22. An extruded thermoplastic net comprising of at least one of a low density, a medium density and high density polyethylene.

23. An integral extruded thermoplastic net and film.

24. An integral net and film according to claim 23, wherein the net is of biplanar configuration.

25. An integral net and film according to claim 23 or 24 comprising a quantity of a blooming additive.

26. An integral net and film according to claims 23 to 25, wherein the net and film are extruded to include at least one laminar layer of relatively high friction material.

27. An integral net and film according to claim 26 composed of polyethylene and a co-extruded layer of ethylene-methylacrylate.

28. An integral net and film according to claim 26, wherein the co-extruded layer is ethylene-vinyl acetate.

29. A matting (15) according to any of claims 11 and 16 to 20, wherein the netting is polyethylene and the coextruded layer is ethylene-vinyl acetate.

30. A matting (15) according to any of claims 11 and 16 to 20, wherein the co-extruded material is ethylene-methacrylate.

31. A matting (15) according to any of claims 12, 20, 21 and 25, wherein the blooming additive is at least one of a polybutylene, an ethylene vinyl acetate copolymer, a thermoplastic rubber copolymer, a styrene butadiene copolymer, an ionomer, an oxidizing vegetable oil or amorphous polypropylene.

6

0259165

**Fig.1**

**Fig.2**

**Fig.3**

**Fig.4**

**Fig.5**

**Fig.6**

0259165

**Fig. 7**

**Fig. 8**

**Fig. 9**

**Fig. 10**